# EUROPEAN PATENT SPECIFICATION

(11) **EP 1 243 951 B1**
(45) Date of publication and mention of the grant of the patent: **25.08.2004**
(21) Application number: 01302551.5
(22) Date of filing: 20.03.2001
(51) Int. Cl.: G02B 6/293, H04J 14/02

(54) **An optical multiplexer/demultiplexer**
Ein optischer Multiplexer/Demultiplexer
Un multiplexeur/démultiplexeur optique

(43) Date of publication of application: 25.09.2002
(73) Proprietor: Agilent Technologies, Inc. (a Delaware corporation), Palo Alto, CA 94303 (US)
(72) Inventor: Tallone, Luigi, Paesana (IT)
(74) Representative: Coker, David Graeme

(56) References cited:
- US-A- 4 799 749
- US-A- 5 064 263
- US-A- 5 457 758
- US-A- 5 657 406
- US-A- 5 812 709
- US-A- 6 122 417
- PATENT ABSTRACTS OF JAPAN vol. 1998, no. 10, 31 August 1998 (1998-08-31) & JP 10 133044 A (TOYO COMMUN EQUIP CO LTD), 22 May 1998 (1998-05-22)
- PATENT ABSTRACTS OF JAPAN vol. 1997, no. 05, 30 May 1997 (1997-05-30) -& JP 09 015438 A (OKI ELECTRIC IND CO LTD), 17 January 1997 (1997-01-17)

## Description

The present invention relates to optical multiplexer/demultiplexer arrangements.

Such devices may find use i.a. in adding or dropping light signals at predetermined wavelengths to or from a wavelength division multiplex fiber optic transmission system.

For instance, in US-A-5 457 758 and US-A-5 459 801 an add-drop device for a wavelength division multiple fiber optic transmission system is disclosed along with a coupler adapted to be used to fabricate add-drop devices, dispersion compensators, amplifiers, oscillators, superluminescent devices, and communication systems. Essentially, the kind of device disclosed in those two documents includes an evanescent wave coupler having a coupling region formed from two single mode waveguides, the coupling region being formed so that there is substantially complete evanescent field coupling of light from one waveguide to the other in a predetermined wavelength band. The device has a Bragg grating disposed in the coupling region in each of the waveguides.

From WO-A-99/12296 a modular cascaded Mach-Zehnder DWDM component is disclosed adapted for use as a multiple channel fiber optic multiplexer, demultiplexer, multiplexer/demultiplexer and/or add-drop component. The device in question includes a plurality of Mach-Zehnder interferometer units, each unit including a pair of 50/50 fiber optic couplers connected by a pair of Bragg gratings and three functional ports including two multi-channel input/output ports as well as one single channel input/output port. The Bragg gratings are tuned to a wavelength of the single channel input/output port and the input/output ports of adjacent interferometer units are connected to each other by fusion splices in a cascade configuration. The component includes a first common input/output connector on a first one of the cascaded interferometer units and a second common input/output connector on the last of the cascaded interferometer units, with the second common input/output connector arranged to permit the addition of add-on multi-channel components.

In US-A-5 657 406 a fiber optic wavelength multiplexer/de-multiplexer is disclosed including a plurality of 2X2 optical couplers each having a pair of matched gratings with respective bandpass wavelengths attached to two of the ports. An input signal enters a port and is split and reflected off the gratings and then recombined so as to provide all the input signal at an output port. Another input signal is incident on the grating which is passed by the grating and is coupled onto the output port with the first input signal. A similar arrangement exists for the other couplers connected in series each of which adds another input wavelength.

Also, from US-A-6 061 484 an add-drop multiplexer is known comprising passive optical components for wavelength division multiplexing. These add-drop multiplexers are adapted for use in branching units to allow signals passing along fibers of a main trunk between terminal stations to be dropped to and added from a spur station. The design of the add-drop multiplexer allows a reduced number of spur fibers to be used as signals are routed between trunk fibers at spur fibers according to carrier wavelength.

Similarly, US patent 6,122,417 discloses a WDM multiplexer/demultiplexer which uses a Fabry-Perot array.

US patent 5,812,709 discloses an optical device which uses a waveguide filter to switch input light signals between transmission to an output port or reflection to a drop port.

US patent 5,064,263 discloses a multiplexing apparatus having a waveguide disposed on a substrate which spreads a plurality of wavelengths into separate channels.

US patent 4,799,799 discloses an optical waveguide with integrated mirrored ends in a matrix type arrangement on a substrate to create a series of optical resonators.

Essentially, all of the prior art solutions considered in the foregoing suffer from at least one of two basic disadvantages.

Firstly, they may tend to be fairly critical to realize (which is a typical drawback common to all arrangements generally referred to as Arrayed Waveguide Gratings or AWG).

Secondly, they tend to be inevitably difficult to compact in a small space if the number of tributary channels to be multiplexed/demultiplexed is high. This drawback is typical of directional couplers, which may also exhibit high insertion losses.

The main object of the present invention is thus providing a compact multiplexer/demultiplexer (MUX-DEMUX) for high numbers of optical channels adapted to be implemented as a compact integrated optics component, even in the presence of a high number of channels to be multiplexed/demultiplexed. The invention also aims at giving rise to arrangements which are not critical to be implemented from the technological viewpoint and, furthermore, are exempt from high insertion losses.

According to the present invention that object is achieved by means of an optical multiplexer/demultiplexer having the features specifically called for in the annexed claims.

In the presently preferred embodiment, the optical multiplexer/demultiplexer of the invention includes an integrated optics substrate such as a rectangular chip of silica on silicon or silica.

The substrate in question defines a main propagation path for the optical radiation arranged in a general zig-zag pattern with at least one cusp. Reflecting elements are arranged at the cusps of the zig-zag pattern to produce propagation of optical radiation along the main propagation path.

The main propagation path has a port adapted to act as an input/output port for an optical radiation including a plurality of wavelengths.

Distributed along the captioned main propagation path are a plurality of selective optical couplers preferably having associated therewith filter elements such as Bragg gratings adapted for adding to the optical radiation and/or removing from the optical radiation a respective tributary optical radiation centered around respective tributary wavelength.

The integrated optics substrate further defines a plurality of tributary propagation paths for optical radiation, each tributary propagation path extending between a respective optical coupler and a respective tributary port adapted to transmit (i.e. act as an input/output port for) a tributary optical radiation centered around a respective tributary wavelength.

Preferably, the integrated optics substrate is in the form of a strip (e.g. a rectangular chip) having opposed side surfaces, with the reflective elements including reflecting metallizations located at the opposed side surfaces of the strip. The reflecting metallizations are realised in the end surfaces of respective designed to obtain 50% energy coupling.

Still preferably, the lengths of the selective optical couplers are designed in order to obtain 100% energy transfer of the optical radiation propagated. The Bragg gratings are preferably provided in the centres of the respective couplers and exhibit a high degree of reflectivity (at least 35 dB). Preferably, the Bragg gratings are photoinduced in the integrated optic substrate.

According to the invention a high number of couplers with different gratings in order to multiplex/demultiplex a correspondingly high number of optical wavelengths may be arranged in a small space. For instance a multiplexer/demultiplexer for use with 20-30 channels can be integrated in a small silicon or silica chip of a few square centimetres.

The invention will now be described, by way of example only, with reference to the annexed figure of drawing schematically showing the general layout of an integrated optics optical multiplexer/demultiplexer according to the invention.

In general terms, the device of the invention, indicated 1 overall, is intended to perform either of the following functions:
- demultiplexing an input optical radiation including a plurality of wavelengths λ1, λ2, ..., λn to extract therefrom a corresponding plurality of tributary optical radiations each centered around a respective tributary wavelength (namely a first tributary wavelength λ1, a second tributary wavelength λ2, ... and an n-th tributary wavelength λn), and
- multiplexing a plurality of tributary optical radiations at respective wavelengths (namely a first tributary radiation at wavelength λ1, a second tributary radiation at wavelength λ2, ... and an n-th tributary radiation at wavelength λn) to give rise to a wavelength division-multiplexed optical radiation including radiations at wavelengths λ1, λ2, ..., λn.

The exemplary description of a preferred embodiment of the invention which follows will be primarily given with reference to operation as a demultiplexer. Those skilled in the art will however promptly appreciate that the arrangement and kind of operation described will immediately apply to the possible use of device 1 as a multiplexer.

Also, it will be appreciated that the term "optical radiation" as used herein is in no way to radiation within the visible range of wavelengths, the term "optical" having to be understood as applying to all wavelengths (including infrared and ultraviolet radiation) generally considered in the field of the optical communications and processing of signals and in the area of integrated optics.

Device 1 is essentially comprised of an integrated optics substrate in the form of e.g. a rectangular chip 2 of silica on silicon or silica in which couplers, Bragg gratings and metallizations can be provided. This is done by resorting to known criteria and technology, thereby rendering any detailed description unnecessary herein.

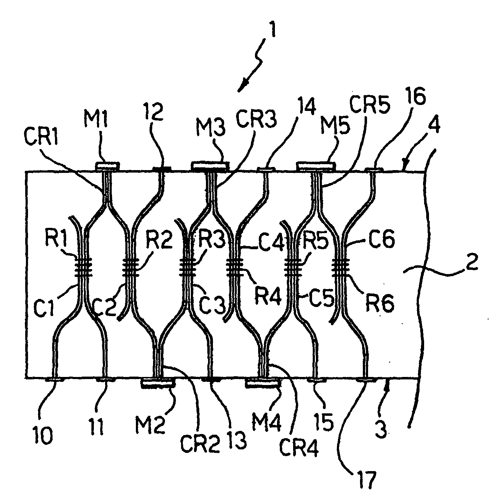

The chip 2 comprising the integrated optics substrate is preferably in the form of a rectangular chip. This is shown in the drawing annexed as of indefinite length, such length being obviously dictated by the desired number of input/output ports to be included in the multiplexer/demultiplexer arrangement.

As shown herein, chip 2 has two opposed parallel side surfaces designated 3 and 4, respectively.

A main port 10 is provided at one of the captioned surfaces (surface 3, in the example shown herein) for transmitting an optical radiation including a plurality of wavelengths λ1, λ2, ..., λn.

"Transmitting" as used herein generally refers to the possible use of port 10 (and the other ports which will be referred to in the following) both for launching (i.e. inputting) and for withdrawing (i.e. outputting) optical radiation into and from substrate 2.

Starting from port 10, a main propagation path for optical radiation is provided in chip 2 (this is done by resorting to current integrated optics optical waveguide technology) extending in a general zig-zag pattern.

Specifically, the captioned zig-zag pattern includes a plurality of cusps arranged in an alternate sequence at the opposite surfaces 3, 4 of chip 2.

Respective reflective elements, such as reflective metallizations M1, M2, M3, etc. are provided at the cusps of the captioned zig-zag pattern.

As a result of this, optical radiation injected into device 1 through port 10 will generally follow a propagation path leading from port 10 provided at side surface 3 of chip 2 towards a first metallization M1 provided at the opposite surface 4. Radiation impinging onto metallization M1 is then reflected back towards metallization M2 provided at the (opposite) side surface 3 and then on to metallization M3 provided again at surface 4 and so on.

In the exemplary embodiment shown herein five such metallization M1 to M5 are shown, but as many such metallizations may be provided as required depending on the number of tributary optical channels to be multiplexed/demultiplexed.

Couplers designated CR1, CR2, ..., CR5 are associated with metallizations M1, M2, ..., M5 respectively. The lengths of couplers CR1 to CR5 are computed to obtain 50% energy coupling and reflective metallizations M1 to M2 are realized in the end surfaces of these couplers.

References C1, C2, ..., C6 denote further selective couplers distributed along the main propagation path considered in the foregoing, coupler Cj being a generally located upstream of reflecting metallization Mj in the captioned propagation path starting from aggregate port 10: e.g. coupler C2 will be located upstream of metallization M2 and downstream of metallization M1 in the direction of propagation of the optical radiation from input port 10.

Preferably, the lengths of couplers C1 to C6 are designed to obtain a 100% energy transfer for all the wavelengths at the input. At the centres of couplers C1 to C5 respective strong Bragg gratings R1 to R6 (having preferably a reflectivity value of at least 35 dB) are provided having respective Bragg wavelengths λ1, λ2, ..., λ6. Gratings R1, R2, etc. are preferably obtained by being photoinduced in chip 2.

Associated with each selective coupler C1 to C6 is a respective tributary propagation path for optical radiation.

Each such tributary propagation path extends between the respective coupler and a respective tributary port 11 to 16 adapted for transmitting a tributary optical radiation centered around a respective tributary wavelength λ1, λ2, ..., λ6.

For instance, a first tributary propagation path will extend between coupler C1 to port 11, while a second tributary propagation path will extend between coupler C2 and tributary port 12. A third tributary propagation path will extend between coupler C3 and tributary port 13, etc.

In use of the device 1 as a demultiplexer, an optical radiation including a plurality of wavelengths λ1, λ2, ..., λn is injected into the device 1 at port 10.

As the optical radiation propagates along the zig-zag propagation pattern provided in substrate 2, the optical radiation at wavelength λ1 is reflected by grating R1 and caused to propagate towards port 11 from which it can be extracted.

All the other wavelengths in the radiation are transferred towards coupler CR1 that, in cooperation with metallization M1 acting as a reflective surface i.e. as a mirror, will send all the remaining radiation towards coupler C2. Coupler C2 and grating R2 will extract from the signal the component (channel) at wavelength λ2 which is sent towards port 12.

All the remaining signal components are sent towards coupler CR2 and reflecting metallization M2 to proceed towards coupler CR3 and grating R3, where the component at wavelength λ3 will be "stripped off" (i.e. extracted from) the radiation to be sent towards port 13.

The same mechanism described repeats itself down to coupler C6 and Bragg grating R6 which will finally extract from the radiation path the component at wavelength λ6, while any remaining wavelengths will be possibly propagated to a terminal port 17.

The underlying physical mechanism of reflection by a grating such as gratings R1 to R6 is well known in the art: see, for instance, F. Bakhti, P. Sansonetti, C. Sinet, L. Gasca, L. Martineau, S. Lacroix, X. Daxhelet, and F. Gonthier, "Optical add/drop multiplexer based on UV-written Bragg grating in a fused 100% coupler" - Electronics Letters 33, 803-804 (1997).

Operation of device 1 as a multiplexer is essentially identical to that described in the foregoing but for the fact that in multiplexer operation tributary optical radiations at wavelengths λ1, λ2, ..., λn are injected into device 1 at ports 11, 12, 13, ..., 1n to give rise to a multiplexed optical radiation leaving device 1 at port 10 acting as an output port.

For instance, when device 1 is used as a multiplexer, an optical signal at wavelength λ2 is injected through port 12 to be reflected by coupler C2 and Bragg grating R2 towards the coupler/mirror CR1/M1. From there the signal in question is sent towards coupler C1 which transfers it towards port 10. In fact, such a signal at wavelength λ2 wil not "see" grating R1 because the Bragg wavelength of this latter (i.e. λ1) is different.

As indicated, the arrangement of the invention enables a fairly high number of couplers with different gratings to be implemented to separate (demultiplex) or mix (multiplex) a corresponding number of different wavelengths in a relatively small space.

Couplers C1, C2, ... and CR1, CR2, ... as well as the other components of the device must of course be optimised.

Specifically, by resorting to known technologies, multiplexer/demultiplexer devices according to the invention can be implemented adapted for use with 20-30 channels on a silicon or silica chip having a surface of a few square centimetres.

Of course, the principle of the invention remaining the same, details and embodiments may be varied with respect to the exemplary embodiment disclosed herein without departing from the scope of the invention as defined in the annexed claims.

## Claims

1. An optical multiplexer/demultiplexer (1), comprising:
- an integrated optics substrate (2) defining a main propagation path for optical radiation, said integrated optics substrate (2) being in the form of a strip having opposed side surfaces (3, 4), and said main propagation path having a port (10) for transmitting an optical radiation including a plurality of wavelengths,
- a plurality of selective optical couplers (C1, C2, ...) distributed along said main propagation path, each said selective optical coupler (C1, C2, ...) being arranged for adding to and removing from said optical radiation a respective tributary optical radiation centered around a respective tributary wavelength, and
- a plurality of tributary propagation paths for optical radiation provided in said integrated optics substrate (2), each of said tributary paths extending between a respective one of said selective optical couplers (C1, C2, ...) and a respective tributary port (11, 12, ...) for transmitting said tributary optical radiation centered around said respective tributary wavelength, and wherein
said main propagation path extends in a zig-zag pattern including at least one cusp, at least one reflecting element (M1, M2, ...) being arranged at said at least one cusp to produce propagation of optical radiation along said zig-zag propagation pattern, **characterized in that**
at least two reflecting elements (M1, M2, ...) are arranged at said opposed surfaces (3, 4) of said integrated optics substrate (2) to produce said zig-zag propagation pattern.

2. The multiplexer/demultiplexer of claim 1, **characterized in that** said at least one reflecting element includes a reflecting metallization (M1, M2 ...) associated with said integrated optics substrate (2).

3. The multiplexer/demultiplexer of claim 1 or claim 2, **characterized in that** said at least one reflecting element (M1, M2 ...) has associated therewith a respective optical coupler (CR1, CR2, ...).

4. The multiplexer/demultiplexer of claim 3, **characterized in that** said respective optical coupler (CR1, CR2, ...) is arranged to obtain 50% optical energy coupling.

5. The multiplexer/demultiplexer of claim 3 or claim 4, **characterized in that** said reflecting element (M1, M2, ...) includes a reflective surface at the end surface of the respective optical coupler (CR1, CR2, ...).

6. The multiplexer/demultiplexer of any of claims 1 to 5, **characterized in that** said main propagation path in said integrated optics substrate (2) includes at least two cusps with at least two respective reflecting elements (M1, M2; M2, M3; ...) located at the said two cusps; at least one of said selective optical couplers (C1, C2, ...) being arranged between said at least two respective reflecting elements.

7. The multiplexer/demultiplexer of any of claims 1 to 6, **characterized in that** said integrated optics substrate (2) is in the form of rectangular chip.

8. The multiplexer/demultiplexer of any of the preceding claims, **characterized in that** said integrated optics substrate (2)is of a material selected out of the group consisting of silica on silicon and silica.

9. The multiplexer/demultiplexer of claim 1, **characterized in that** said selective optical couplers (C1, C2, ...) are arranged to obtain 100% energy transfer of optical radiation propagating along said main propagation path.

10. The multiplexer/demultiplexer of claim 1 or claim 9, **characterized in that** said selective optical couplers (C1, C2, ...) have associated therewith respective optical filters (R1, R2, ...) each arranged to filter out of said optical radiation propagating along said main propagation path a respective optial radiation centered around a respective filter wavelength.

11. The multiplexer/demultiplexer of claim 10, **characterized in that** said filters are in the form of Bragg gratings (R1, R2, ...) each reflecting radiation at a respective filter wavelength.

12. The multiplexer/demultiplexer of claim 11, **characterized in that** said Bragg gratings (R1, R2, ...) have a reflectivity of at least 35 dB.

13. The multiplexer/demultiplexer of claim 11 or claim 12, **characterized in that** said Bragg gratings (R1, R2, ...) are photoinduced in said integrated optics substrate (2).

## Patentansprüche

1. Ein optischer Multiplexer/Demultiplexer (1), der folgende Merkmale umfaßt:
- ein integriertes Optiksubstrat (2), das einen Hauptausbreitungsweg für optische Strahlung definiert, wobei das integrierte Optiksubstrat (2) in der Form eines Streifens ist, der gegenüberliegende Seitenoberflächen (3, 4) aufweist, und der Hauptausbreitungsweg ein Tor (10) zum Senden einer optischen Strahlung aufweist, die eine Mehrzahl von Wellenlängen umfaßt,
- eine Mehrzahl von selektiven optischen Kopplern (C1, C2, ...), die entlang dem Hauptausbreitungsweg verteilt sind, wobei jeder der selektiven optischen Koppler (C1, C2, ...) angeordnet ist zum Hinzufügen oder Entfernen einer jeweiligen Nebenoptikstrahlung, die um eine jeweilige Nebenwellenlänge zentriert ist, von der optischen Strahlung, und
- eine Mehrzahl von Nebenausbreitungswegen für optische Strahlung, die in dem integrierten Optiksubstrat (2) vorgesehen ist, wobei sich jeder der Nebenwege zwischen einem jeweiligen der selektiven optischen Koppler (C1, C2, ...) und einem jeweiligen Nebentor (11, 12, ...) erstreckt, zum Senden der Nebenoptikstrahlung, die um die jeweilige Nebenwellenlänge zentriert ist, und wobei
sich der Hauptausbreitungsweg in einer Zickzackstruktur erstreckt, die zumindest eine Spitze umfaßt, wobei zumindest ein reflektierendes Element (M1, M2, ...) an der zumindest einen Spitze angeordnet ist, um eine Ausbreitung der optischen Strahlung entlang der Zickzackausbreitungsstruktur zu erzeugen, **dadurch gekennzeichnet, daß**
zumindest zwei reflektierende Elemente (M1, M2, ...) an den gegenüberliegenden Oberflächen (3, 4) des integrierten Optiksubstrats (2) angeordnet sind, um die Zickzackausbreitungsstruktur zu erzeugen.

2. Der Multiplexer/Demultiplexer gemäß Anspruch 1, **dadurch gekennzeichnet, daß** das zumindest eine reflektierende Element eine reflektierende Metallisierung (M1, M2, ...) umfaßt, die dem integrierten Optiksubstrat (2) zugeordnet ist.

3. Der Multiplexer/Demultiplexer gemäß Anspruch 1 oder Anspruch 2, **dadurch gekennzeichnet, daß** dem zumindest einen reflektierenden Element (M1, M2, ...) ein jeweiliger optischer Koppler (CR1, CR2, ...) zugeordnet ist.

4. Der Multiplexer/Demultiplexer gemäß Anspruch 3, **dadurch gekennzeichnet, daß** der jeweilige optische Koppler (CR1, CR2, ...) angeordnet ist, um 50 % optische Energiekopplung zu erhalten.

5. Der Multiplexer/Demultiplexer gemäß Anspruch 3 oder Anspruch 4, **dadurch gekennzeichnet, daß** das reflektierende Element (M1, M2, ...) eine reflektierende Oberfläche an der Endoberfläche des jeweiligen optischen Kopplers (CR1, CR2, ...) umfaßt.

6. Der Multiplexer/Demultiplexer gemäß einem der Ansprüche 1 bis 5, **dadurch gekennzeichnet, daß** der Hauptausbreitungsweg in dem integrierten Optiksubstrat (2) zumindest zwei Spitzen mit zumindest zwei jeweiligen reflektierenden Elementen (M1, M2; M2, M3; ...) umfaßt, die an den beiden Spitzen positioniert sind; wobei zumindest einer der selektiven optischen Koppler (C1, C2, ...) zwischen den zumindest zwei jeweiligen reflektierenden Elementen angeordnet ist.

7. Der Multiplexer/Demultiplexer gemäß einem der Ansprüche 1 bis 6, **dadurch gekennzeichnet, daß** das integrierte Optiksubstrat (2) in der Form eines rechteckigen Chips ist.

8. Der Multiplexer/Demultiplexer gemäß einem der vorhergehenden Ansprüche, **dadurch gekennzeichnet, daß** das integrierte Optiksubstrat (2) aus einem Material ausgewählt ist, das aus der Gruppe ausgewählt ist, die aus Silika auf Silizium und Silika besteht.

9. Der Multiplexer/Demultiplexer gemäß Anspruch 1, **dadurch gekennzeichnet, daß** die selektiven optischen Koppler (C1, C2, ...) angeordnet sind, um 100 % Energieübertragung der optischen Strahlung zu erhalten, die sich entlang dem Hauptausbreitungsweg ausbreitet.

10. Der Multiplexer/Demultiplexer gemäß Anspruch 1 oder Anspruch 9, **dadurch gekennzeichnet, daß** den selektiven optischen Koppler (C1, C2, ...) jeweilige optische Filter (R1, R2, ...) zugeordnet sind, die jeweils angeordnet sind, um aus der optischen Strahlung, die sich entlang dem Hauptausbreitungsweg ausbreitet, eine jeweilige optische Strahlung herauszufiltern, die um eine jeweilige Filterwellenlänge zentriert ist.

11. Der Multiplexer/Demultiplexer gemäß Anspruch 10, **dadurch gekennzeichnet, daß** die Filter in der Form von Bragg-Gittern (R1, R2, ...) sind, die jeweils Strahlung bei einer jeweiligen Filterwellenlänge reflektieren.

12. Der Multiplexer/Demultiplexer gemäß Anspruch 11, **dadurch gekennzeichnet, daß** die Bragg-Gitter (R1, R2, ...) ein Reflexionsvermögen von zumindest 35 dB aufweisen.

13. Der Multiplexer/Demultiplexer gemäß Anspruch 11 oder Anspruch 12, **dadurch gekennzeichnet, daß** die Bragg-Gitter (R1, R2, ...) in das integrierte Optiksubstrat (2) photoinduziert sind.

## Revendications

1. Multiplexeur/démultiplexeur optique (1), comprenant :
- un substrat d'optique intégré (2) définissant un chemin de propagation principal pour rayonnement optique, ledit substrat d'optique intégré (2) étant sous la forme d'une bande ayant des faces opposées (3, 4), et ledit chemin de propagation principal ayant un orifice (10) pour transmettre un rayonnement optique comprenant une pluralité de longueurs d'ondes,
- une pluralité de coupleurs optiques sélectifs (C1, C2,...) répartis le long dudit chemin de propagation principal, chaque dit coupleur optique sélectif (C1, C2,...) étant disposé pour ajouter à et retirer dudit rayonnement optique un rayonnement secondaire respectif centré autour d'une longueur d'ondes secondaire respective, et
- une pluralité de chemins de propagation secondaire pour rayonnement optique proposés dans ledit substrat d'optique intégré (2), chacun desdits chemins secondaires s'étendant entre un respectif desdits coupleurs optiques sélectifs (C1, C2,...) et un orifice secondaire respectif (11, 12,...) pour transmettre ledit rayonnement optique secondaire centré autour de ladite longueur d'ondes secondaire respective, et dans lequel
ledit chemin de propagation principal s'étend dans un motif en zigzag comprenant au moins un point de rebroussement, au moins un élément réfléchissant (M1, M2,...) étant disposé audit au moins un point de rebroussement pour produire la propagation du rayonnement optique le long dudit motif de propagation en zigzag, **caractérisé en ce que**
au moins deux éléments réfléchissants (M1, M2,...) sont disposés aux dites surfaces opposés (3, 4) dudit substrat d'optique intégré (2) pour produire ledit motif de propagation en zigzag.

2. Multiplexeur/démultiplexeur selon la revendication 1, **caractérisé en ce que** ledit au moins un élément réfléchissant comprend une métallisation réfléchissante (M1, M2,...) associée au dit substrat d'optique intégré (2).

3. Multiplexeur/démultiplexeur selon la revendication 1 ou la revendication 2, **caractérisé en ce que** ledit au moins un élément réfléchissant a associé avec lui un coupleur optique respectif (CR1, CR2,...).

4. Multiplexeur/démultiplexeur selon la revendication 3, **caractérisé en ce que** ledit coupleur optique respectif (CR1, CR2,...) est disposé pour obtenir un couplage d'énergie optique de 50 %.

5. Multiplexeur/démultiplexeur selon la revendication 3 ou la revendication 4, **caractérisé en ce que** ledit élément réfléchissant (M1, M2,...) comprend une surface réflective à la surface d'extrémité du coupleur optique respectif (CR1, CR2,...).

6. Multiplexeur/démultiplexeur de l'une quelconque des revendications 1 à 5, **caractérisé en ce que** ledit chemin de propagation principal dans ledit substrat d'optique intégré (2) comprend au moins deux points de rebroussement avec au moins deux éléments réfléchissants respectifs (M1, M2 ; M2, M3 ; ...) situés aux dits deux points de rebroussement ; au moins un desdits coupleurs optiques sélectifs (C1, C2,...) étant disposé entre lesdits au moins deux éléments réfléchissants respectifs.

7. Multiplexeur/démultiplexeur selon les revendications 1 à 6, **caractérisé en ce que** ledit substrat d'optique intégré (2) est sous la forme d'une puce rectangulaire.

8. Multiplexeur/démultiplexeur de l'une quelconque des revendications précédentes, **caractérisé en ce que** ledit substrat d'optique intégré (2) est d'un matériau sélectionné à partir du groupe constitué de silice sur silicium et de silice.

9. Multiplexeur/démultiplexeur selon la revendication 1, **caractérisé en ce que** lesdits coupleurs optiques sélectifs (C1, C2,...) sont disposés pour obtenir un transfert d'énergie de 100 % de rayonnement optique se propageant le long dudit chemin de propagation principal.

10. Multiplexeur/démultiplexeur selon la revendication 1 ou la revendication 9, **caractérisé en ce que** lesdits coupleurs optiques sélectifs (C1, C2,...) ont des filtres optiques respectifs (R1, R2,...) associés avec ceux-ci, chacun disposé pour filtrer à partir dudit rayonnement optique se propageant le long dudit chemin de propagation principal un rayonnement optique respectif centré autour d'une longueur d'ondes de filtre respective.

11. Multiplexeur/démultiplexeur selon la revendication 10, **caractérisé en ce que** lesdits filtres sont sous la forme de grilles de Bragg (R1, R2,...), chacune réfléchissant le rayonnement à une longueur d'ondes de filtre respective.

12. Multiplexeur/démultiplexeur selon la revendication 11, **caractérisé en ce que** les grilles de Bragg (R1, R2,...) ont une réflectivité d'au moins 35 dB.

13. Multiplexeur/démultiplexeur selon la revendication 11 ou la revendication 12, **caractérisé en ce que** les grilles de Bragg (R1, R2,...) sont photoinduites dans ledit substrat d'optique intégré (2).
